# EUROPÄISCHE PATENTSCHRIFT

(11) **EP 2 915 764 B1**
(45) Veröffentlichungstag und Bekanntmachung des Hinweises auf die Patenterteilung: **24.10.2018**
(21) Anmeldenummer: 15157285.6
(22) Anmeldetag: 03.03.2015
(51) Int. Cl.: B65G 17/20, G07F 11/58, F16G 13/07

(54) **Kettenglied zur Ausbildung einer Umlaufkette für eine Vorrichtung zur Lagerung und Bereitstellung mindestens eines Hängeprodukts**
CHAIN LINK FOR FORMING A CIRCULATION CHAIN FOR A DEVICE FOR STORING AND PROVIDING AT LEAST ONE HANGING PRODUCT
ARTICULATION DE CHAÎNE DESTINÉE À FORMER UNE CHAÎNE CIRCULAIRE POUR UN DISPOSITIF DE STOCKAGE ET DE PRÉPARATION D'AU MOINS UN PRODUIT SUSPENDU

(30) Priorität: 03.03.2014 CH 3002014
(43) Veröffentlichungstag der Anmeldung: 09.09.2015
(73) Patentinhaber: josTTech GmbH, 8855 Wangen/SZ (CH)
(72) Erfinder: Jost, Urs, 8855 Wangen (CH); Schlum, Silvan, 8606 Nänikon (CH); Schmuki, Fabio, 8854 Siebnen (CH)
(74) Vertreter: Schneider Feldmann AG Patent- und Markenanwälte

(56) Entgegenhaltungen:
- DE-C- 611 603
- US-A- 507 362
- US-A- 2 000 932
- US-A- 3 673 794
- US-A- 3 756 455
- US-A- 3 952 860
- US-A1- 2009 212 064
- US-B1- 6 439 423

## Beschreibung

### Technisches Gebiet

Die vorliegende Erfindung beschreibt ein Kettenglied zur Ausbildung einer Umlaufkette für eine Vorrichtung zur Lagerung und Bereitstellung mindestens eines Hängeprodukts nach den Merkmalen des Oberbegriffs des unabhängigen Patentanspruchs 1, eine Umlaufkette mit mindestens zwei Kettengliedern, ein Verfahren zur Ausbildung einer Umlaufkette sowie eine Vorrichtung zur Lagerung und Bereitstellung mindestens eines Hängeprodukts.

### Stand der Technik

Vorrichtungen zur Lagerung und Bereitstellung von Hängeprodukten betreffen beispielsweise Verkauf- bzw. Ausgabeautomaten. Üblicherweise dienen solche Vorrichtungen zur Lagerung und Bereitstellung von Hängeprodukten, welche aneinandergereiht an einer Umlaufkette mittels Aufhängehaken aufgehängt sind.

Wenn man dem Verkaufsautomaten ein Hängeprodukt entnehmen möchte, dann wird nach Wahl und Bezahlung des gewünschten Hängeprodukts eine Ausgabe gestartet. Die Umlaufkette an jeweils einem Ausgabearm mit einem gewünschten Hängeprodukt wird mittels eines Elektromotors in die Ausgaberichtung bewegt. Üblicherweise sind jeweils mehrere Ausgabearme in jeweils übereinanderliegenden Reihen in solchen Vorrichtungen angeordnet.

Die Freigabe des Hängeprodukts erfolgt an einer Ausgabeposition der betätigten Umlaufkette. An der Ausgabeposition wird die Umlaufkette derart umgelenkt, dass ein freies Ende des Aufhängehakens nach unten ausgerichtet ist, das Hängeprodukt vom Aufhängehaken freigegeben wird und in einen Entnahmeschacht ausgegeben wird. Der Benutzer kann das gewünschte und bezahlte Hängeprodukt durch den Zugriff in den Entnahmeschacht entnehmen.

Das Ausgabesystem ist ein heikler Punkt bei der Herstellung und dem Betrieb derartiger Verkaufsautomaten. Die Verkaufsautomaten müssen absolut verlässlich arbeiten, so dass das gewünschte und bezahlte Produkt den Entnahmeschacht erreicht. Es muss dafür gesorgt werden, dass die Umlaufketten korrekt angetrieben werden, damit die Produktausgabe erfolgen kann. In der Vergangenheit haben die Ausgabesysteme, insbesondere die verwendeten Umlaufketten, immer wieder Probleme gemacht.

Wenn die aus dem Stand der Technik bekannten Umlaufketten defekt sind, ist eine aufwändige Reparatur erforderlich. Kürzere Wartungsintervalle bzw. häufigere Kontrollen der Umlaufketten sind eine kostspielige Lösung, um die Ausfallzeiten der Verkaufsautomaten klein zu halten, weshalb nach anderen Lösungen gesucht wurde.

Aus dem Stand der Technik sind Vorrichtungen mit einer Vielzahl von Kettengliedern geeignet zur Ausbildung einer Umlaufkette bekannt. Beispielsweise umfassen solche Kettenglieder aus dem Dokument NL 7010181 einen Aufhängehaken zum Aufhängen eines Hängeprodukts.

Im Weiteren umfassen diese Kettenglieder aus NL 7010181 zwei Bohrungen in den einzelnen Kettengliedern, welche als Aussparungen eines Schwenklagerteils aufgefasst werden können.

Zudem werden jeweils durch Einführen und Fixieren einer - in Richtung der Längserstreckung des Kettenglieds beabstandet zum Schwenklagerteil angeordneten - Lagerachse in Gestalt eines Bolzens in Aussparungen des Schwenklagerteils zweier benachbarter Kettenglieder die Kettenglieder zu einer endlosen Umlaufkette ausgebildet. Die Abschnitte, welche das Schwenklagerteil von der Lagerachse beabstanden, können als parallele Wangen aufgefasst werden.

Die Umlaufkette aus NL 7010181 besitzt die Gestalt einer bei Fahrrädern bekannten Umlaufkette. Kettenglieder solcher Umlaufketten von Fahrrädern umfassen üblicherweise eine Vielzahl von Bauteilen wie eine Aussenlasche bzw. eine Innenlasche mit jeweils zwei Bohrungen, einen Bolzen, eine Hülse sowie einer Rolle. Üblicherweise bedarf es zudem besonderer Werkzeuge wie z.B. einen Kettennieter zur Herstellung einer geschlossenen Umlaufkette. Im Weiteren ist eine geeignete Kettenpflege mittels Schmierung notwendig, damit Schmutzpartikel aufgrund dessen abrasiver Wirkung nicht zu den Kettengelenken vordringen können. Die Schmierung der Kette ist zudem notwendig, um wasserabweisend und damit widerstandsfähig gegen Feuchtigkeit zu sein.

Die aus NL 7010181 bekannte Umlaufkette beziehungsweise Kettenglieder haben somit den Nachteil, dass zusätzliche Mittel zum Fixieren der resultierenden Umlaufkette der Vorrichtung, wie z.B. ein Kettennieter, notwendig sind, damit die Lagerachse beziehungsweise der Bolzen im Schwenklagerteil verbleibt. Damit ist das Fixieren und das Lösen zweier benachbarter Kettenglieder aufgrund der Vielzahl der Bauteile eines Kettenglieds, beispielsweise bei Wartungsarbeiten an der resultierenden Umlaufkette, erschwert. Im Weiteren ist der hohe Wartungsaufwand bzgl. Schmierung der Umlaufkette nachteilig.

Aus US 3,952,860 beschreibt im Weiteren in einem Ausführungsbeispiel ein Kettenglied nach dem Oberbegriff des Anspruchs 1. Dabei umfasst das Kettenglied ein derart ausgestaltetes Schwenklagerteil zur Aufnahme einer Lagerachse eines folgenden Kettenglieds, wodurch in einer Schwenkbewegung eine Kopplung zweier benachbarter Kettenglieder erzielt wird.

Die dabei gebildete Umlaufkette muss gemäss US 3,952,860 mit zusätzlichen Mitteln versehen werden, um beispielsweise Stückgut zu befördern.

Offensichtlich hat es in den letzten Jahren keine Bestrebungen gegeben, derartige Nachteile von Kettengliedern für die Schaffung von Umlaufketten für solche Vorrichtungen zu beheben.

### Darstellung der Erfindung

Die vorliegende Erfindung hat sich zur Aufgabe gestellt, ein Kettenglied zur vereinfachten Bildung einer Umlaufkette einer Vorrichtung zur Lagerung und Bereitstellung mindestens eines Hängeprodukts zu schaffen, welches werkzeugfrei mit benachbarten Kettengliedern zu einer Umlaufkette vereinfacht lösbar verbindbar ist.

Eine weitere Aufgabe ist die Schaffung einer Umlaufkette, welche wesentlich problemloser betreibbar ist und im Gehäuse der Vorrichtung zur Lagerung und Bereitstellung von Hängeprodukten ohne Schmierung und mit minimaler Wartung auskommt.

Diese Aufgaben werden mit einem Kettenglied mit den Merkmalen des unabhängigen Patentanspruchs 1 gelöst.

Weitere vorteilhafte Ausgestaltungsformen sind in den abhängigen Ansprüchen angegeben.

Erfindungsgemäss ist das Kettenglied einstückig ausgestaltet. Im Rahmen einer bevorzugten Weiterbildung der Erfindung kann das erfindungsgemässe Kettenglied einstückig aus Kunststoff ausgestaltet sein. Die einstückige Ausgestaltung des erfindungsgemässen Kettenglieds vereinfacht die Handhabung des erfindungsgemässen Kettenglieds vorteilhaft. Insbesondere kann auf ein Hantieren mit einer Vielzahl von Bauteilen verzichtet werden.

Im Weiteren ist das Schwenklagerteil C-förmig als offene Öse mit einem Einführungsmaul zur Aufnahme der Lagerachse eines folgenden, erfindungsgemässen Kettenglieds ausgebildet.

Das Einführungsmaul ist in die Aussparung mündend sich in Querrichtung vollständig entlang der Aussparung erstreckend ausgebildet.

Ein derartiges Einführungsmaul des Schwenklagerteils geeignet zur Aufnahme der Lagerachse erlaubt vorteilhaft in einfacher Weise werkzeugfrei eine leicht lösbare Kopplung beziehungsweise Fixierung zweier benachbarter, erfindungsgemässer Kettenglieder einer Umlaufkette in einer Vorrichtung zur Lagerung und Bereitstellung von mindestens einem Hängeprodukt.

Im Weiteren ist eine aus einer Vielzahl aneinander gekoppelter Kettenglieder erhaltene Umlaufkette problemloser betreibbar und kommt mit minimaler Wartung und ohne Schmierung aus, indem aufgrund der einstückigen Ausgestaltung des erfindungsgemässen Kettenglieds im Gegensatz zu den aus dem Stand der Technik bekannten Kettengliedern eine Schmierung zum Schutz der Gelenke zwischen einzelnen Bauteilen entfällt.

Sollten andererseits trotzdem Wartungsarbeiten an der Umlaufkette notwendig sein, ist die leichte Lösbarkeit zwischen den Kettengliedern vorteilhaft.

Besonders bevorzugt ist die Öffnungsweite des Einführungsmauls geringer als der Durchmesser der vorzugsweise als Drehzylinder ausgebildeten Aussparung ausgebildet.

Vorzugsweise weist das Kettenglied zwischen den parallelen Wangen, welche in Richtung der Längserstreckung des Kettenglieds das Schwenklagerteil und die Lagerachse beabstanden, einen Hohlraum oder eine Aussparung auf.

Bevorzugt ist die Lagerachse derart ausgestaltet, dass die Lagerachse quer zur Achse der Lagerachse durch das Einführungsmaul bis in die Aussparung des als offene Öse ausgestalteten C-förmigen Schwenklagerteils mündend aufnehmbar ist.

In einer bevorzugten Weiterbildung der Erfindung ist die Lagerachse stegförmig ausgebildet und zylindrisch, wobei die Lagerachse einstückig mit den Wangen an einem Ende verbunden ist.

Im Weiteren ist die Lagerachse bevorzugt mindestens teilweise abgeflacht.

Besonders bevorzugt ist zumindest bereichsweise, vorzugsweise im abgeflachten Bereich, die Höhe der Lagerachse geringer oder gleich der Öffnungsweite des Einführmauls des Schwenklagerteils ausgebildet, derart, so dass die Lagerachse durch das Einführungsmaul aufnehmbar ist.

Vorzugsweise wird zwischen der Verlaufsrichtung des Einführungsmauls des Schwenklagerteils und der Längserstreckung des erfindungsgemässen Kettenglieds ein Winkel α aufgespannt zwischen 5° bis 90°, bevorzugt 30° bis 60°, am meisten bevorzugt 40° bis 50°.

Bevorzugt ist das erfindungsgemässe Kettenglied zur Ausbildung einer Umlaufkette aus einer Vielzahl von Kettengliedern derart ausgestaltet, dass mittels Einführen der Lagerachse eines Kettenglieds in das Einführungsmaul des Schwenklagerteils eines benachbarten Kettenglieds bei einer Einfahrausrichtung und anschliessendes Schwenken von der Einfahrausrichtung in eine Betriebsausrichtung um einen Winkel β=360°-α das eine Kettenglied mit dem benachbarten Kettenglied lösbar koppelbar ist.

Im Sinne der vorliegenden Erfindung ist unter einer Einfahrausrichtung zweier erfindungsgemässer Kettenglieder die Ausrichtung der Lagerachse des einen Kettenglieds zur Verlaufsrichtung des Einführungsmauls des anderen Kettenglieds zu verstehen.

Im Weiteren ist im Sinne der vorliegenden Erfindung unter einer Betriebsausrichtung eine Ausrichtung zwischen zwei erfindungsgemässen Kettenglieder zu verstehen, in der die Längserstreckungen der erfindungsgemässen Kettenglieder im Wesentlichen in einer Linie liegen entlang einer Längserstreckung eines Ausgabearms der Vorrichtung zur Lagerung und Bereitstellung von Hängeprodukten.

Besonders bevorzugt ist der Durchmesser der zylindrisch ausgestalteten Lagerachse gleich dem Durchmesser der Aussparung. Dadurch wird sichergestellt, dass die Lagerachse kaum unerwünschtes Spiel in der Aussparung hat. Im Sinne der vorliegenden Erfindung soll nur ein erwünschtes, für die Schwenkbewegung erforderliches Spiel vorhanden sein.

In einer solchen verschwenkten Position der Lagerachse des einen Kettenglieds gegenüber dem Schwenklagerteil des folgenden Kettenglieds wird im Zusammenhang mit einer geringeren Öffnungsweite des Einführungskanals beziehungsweise geringeren Höhe der Lagerachse, insbesondere im abgeflachten Bereich, gegenüber dem Durchmesser der Aussparung erzielt, dass die Lagerachse im Schwenklagerteil in einfacher Weise zusätzlich blockiert wird.

Vorzugsweise umfasst das Kettenglied eine vordere Schulter und eine gegenüberliegend angeordnete hintere Schulter, die derart angeordnet und ausgestaltet sind, zwei benachbarte Kettenglieder in der Betriebsausrichtung in Richtung deren Längserstreckungen zueinander auszurichten.

Im Sinne der vorliegenden Erfindung erlaubt die Anordnung der vorderen und hinteren Schulter des erfindungsgemässen Kettenglieds, dass in der Betriebsausrichtung zweier benachbarter Kettenglieder die vordere und hintere Schulter aneinander anliegen.

Alternativ oder zusätzlich unterstützend ist es auch denkbar, die Kettenglieder durch situationsgerechte Einstellung der wirkenden Zugkraft zwischen der Vielzahl der erfindungsgemässen Kettenglieder in der geschlossenen Umlaufkette in der Betriebsausrichtung in Richtung deren Längserstreckungen zueinander auszurichten.

Die vordere und hintere Schulter des erfindungsgemässen Kettenglieds erleichtert in einfacher Weise die Ausrichtung benachbarter, erfindungsgemässer Kettenglieder in der Betriebsausrichtung. Insbesondere verbleiben zwei benachbarte, erfindungsgemässe Kettenglieder beispielsweise auch beim Aufhängen von Hängeprodukten mit unterschiedlichem Gewicht in der Betriebsausrichtung, d.h. auf einer Linie, zueinander.

Mit anderen Worten soll ein Durchhängen einzelner Hängeprodukte in der Betriebsausrichtung verhindert werden, welche beispielsweise die Funktion eines Ausgabearms in einer darunter angeordneten Reihe negativ beeinflussen können.

Bevorzugt ist das Kettenglied derart ausgestaltet, dass der Winkel β zweier benachbarter, erfindungsgemässer Kettenglieder der Umlaufkette in der Einfahrausrichtung grösser ist als ein Winkel γ zweier benachbarter, erfindungsgemässer Kettenglieder der Umlaufkette in einer Umlenkausrichtung, insbesondere bei einer Ausgabeposition der Vorrichtung zur Ausgabe eines Hängeprodukts.

Dadurch ist vorteilhaft sichergestellt, dass zwei benachbarte, erfindungsgemässe Kettenglieder in keiner Ausrichtung zueinander während des Betriebs der Vorrichtung automatisch ausklinken können.

Bevorzugt ist das Kettenglied als Kunststoff-Spritzgussteil ausgebildet.

Als Kunststoff zur Herstellung eines als Spritzgussteil ausgebildeten Kettenglieds können Polyolefine, beispielsweise Polypropylen, Polystyrol (PS) und dessen Copolymere, beispielsweise AcrylnitrilButadien-Styrol (ABS), Polyamid (PA), Polyoxymethylen (POM) Verwendung finden.

Im Gegensatz zu Kettengliedern aus Metall sind aus Kunststoff hergestellte Kettenglieder gegenüber Feuchtigkeit widerstandsfähiger. Dadurch verringert sich der Wartungsaufwand, indem auf eine Schmierung der Kettenglieder verzichtet werden kann.

Ein weiterer Aspekt der Erfindung betrifft eine Umlaufkette für eine Vorrichtung zur Lagerung und Bereitstellung eines Hängeprodukts umfassend eine Vielzahl erfindungsgemässer Kettenglieder.

Eine solche Umlaufkette, welche aus einer Vielzahl erfindungsgemässer Kettenglieder erhalten wird, ist problemloser betreibbar und kommt vorteilhaft ohne Schmierung und mit minimaler Wartung aus, womit gleichzeitig weitgehend bezüglich der Wartung auf fachmännische Hilfe verzichtet werden kann.

Ein weiterer Aspekt der Erfindung betrifft ein Verfahren zur Ausbildung einer Umlaufkette für eine Vorrichtung zur Lagerung und Bereitstellung eines Hängeprodukts. Das erfindungsgemässe Verfahren umfasst die Schritte:
(i) Bereitstellung einer Anzahl n erfindungsgemässer Kettenglieder
(ii) Lösbares Koppeln jeweils eines ersten mit dem zweiten erfindungsgemässen Kettenglied und Wiederholung dieser Kopplung bis zum (n-1)-ten mit dem n-ten Kettenglied sowie des ersten mit dem n-ten Kettenglieds zur Ausbildung einer geschlossenen Umlaufkette, mittels Einführen der Lagerachse eines Kettenglieds in das Einführungsmaul des Schwenklagerteils eines benachbarten, erfindungsgemässen Kettenglieds.

Vorzugsweise umfasst das erfindungsgemässe Verfahren in Schritt (ii), dass das lösbare Koppeln der Anzahl n erfindungsgemässer Kettenglieder mittels Einführen der Lagerachse eines erfindungsgemässen Kettenglieds in das Einführungsmaul des Schwenklagerteils eines benachbarten, erfindungsgemässen Kettenglieds bei einer Einfahrausrichtung und Schwenken von der Einfahrausrichtung in eine Betriebsausrichtung um einen Winkel β=360°-α erfolgt.

Im Rahmen einer bevorzugten Weiterbildung der vorliegenden Erfindung erfolgt die Schwenkbewegung zwischen der Lagerachse des einen Kettenglieds relativ zum Schwenklagerteil des anderen Kettenglieds um die Achse der Lagerachse.

Diese zusätzliche Schwenkbewegung verbessert vorteilhaft die Kopplung zweier benachbarter, erfindungsgemässer Kettenglieder.

Ein weiterer Aspekt der Erfindung betrifft eine Vorrichtung zur Lagerung und Bereitstellung eines Hängeprodukts mit einer erfindungsgemässen Umlaufkette mit einer Vielzahl von erfindungsgemässen Kettengliedern. Besonders bevorzugt ist es möglich, dass jedem Hängeprodukt ein RFID-Kleber angebracht wird, um überwachen zu können, ob auch das erwartete Produkt ausgegeben wurde bzw. wird.

Vorzugsweise umfasst die Vorrichtung einen Abstreifer zum Abstreifen des Hängeprodukts. Im Rahmen einer bevorzugten Weiterbildung ist der Abstreifer im Bereich der Ausgabeposition der Vorrichtung angeordnet.

Ein solcher Abstreifer unterstützt vorteilhaft die Freigabe des Hängeprodukts bei der Ausgabeposition der Vorrichtung.

Bevorzugt umfasst die Vorrichtung einen ersten Ausgabearm und einen zweiten Ausgabearm, wobei der ersten Ausgabearm fest mit der Vorrichtung verbunden ist und wobei der zweite Ausgabearm relativ zum ersten Ausgabearm beweglich ist.

Insbesondere bevorzugt sind die elektrischen Verbindungen zwischen dem zweiten Ausgabearm zum ersten Ausgabearm durch ein Steckersystem, durch flexible Kabel oder drahtlos ausgebildet.

Dadurch ergibt sich im ausgezogenen Zustand eine komfortable Befüllmöglichkeit der Vorrichtung für das Bedienpersonal.

Vorzugsweise umfasst die Vorrichtung einen Detektor zur Feststellung der Anwesenheit eines Hängeprodukts an einem Kettenglied, insbesondere an der Ausgabeposition. Insbesondere ist vorzugsweise der Detektor derart angeordnet und ausgestaltet, so dass die Anwesenheit eines nächsten Hängeprodukts am vordersten Aufhängehaken bei der Ausgabeposition festgestellt werden kann. Besonders bevorzugt erfolgt die Detektion mechanisch oder optisch.

Im Weiteren umfasst die Vorrichtung vorzugsweise eine Steuereinheit, wobei die Steuereinheit derart mit dem Detektor und der Vorrichtung gekoppelt ist, dass abhängig von der Feststellung der Anwesenheit eines Hängeprodukts am vordersten Aufhängehaken die Umlaufkette nachgefahren wird.

In anderen Worten ausgedrückt ist die Steuereinheit derart ausgestaltet, dass bei negativer Feststellung, d.h. Abwesenheit eines Hängeprodukts am vordersten Aufhängehaken, die Umlaufkette nachgefahren wird bis zur positiven Feststellung, d.h. Anwesenheit eines Hängeprodukts am vordersten Aufhängehaken.

Im Weiteren umfasst die Vorrichtung bevorzugt einen Detektor, welcher derart angeordnet und ausgestaltet ist, die Anwesenheit Hängeprodukts an mehreren Kettengliedern, insbesondere ausgehend von der Ausgabeposition, festzustellen.

In anderen Worten ausgedrückt ist der Detektor derart angeordnet und ausgestaltet, so dass frühzeitig ein bevorstehender Leerzustand eines jeweiligen Ausgabearms festgestellt werden kann.

Ein solcher Detektor hat den Vorteil, dass der jeweilige Ausgabearm vor einem Leerzustand wieder befüllt werden kann.

### Kurze Beschreibung der Zeichnungen

Die Erfindung wird nachfolgend anhand der Zeichnungen erläutert. Es zeigen:
- Fig. 1a: Ausschnitt aus einer erfindungsgemässen Vorrichtung im Betrieb
- Fig. 1b: skizzierte Darstellung einer erfindungsgemässen Vorrichtung mit ausgezogenem Ausgabearm
- Fig. 2a: perspektivische Seitenansicht eines erfindungsgemässen Kettenglieds
- Fig. 2b: schematischer Längsschnitt eines erfindungsgemässen Kettenglieds
- Fig. 3: schematische Seitenansicht zweier benachbarter erfindungsgemässer Kettenglieder in einer Einfahrausrichtung
- Fig. 4: schematische Seitenansicht zweier benachbarter erfindungsgemässer Kettenglieder in einer Betriebsausrichtung
- Fig. 5: schematische Seitenansicht zweier benachbarter erfindungsgemässer Kettenglieder in einer Umlenkausrichtung

### Beschreibung

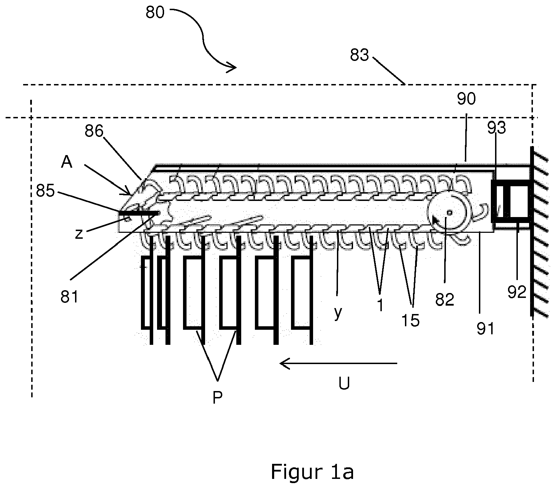

Fig. 1a zeigt einen Ausschnitt in einem Gehäuse 83 einer erfindungsgemässen Vorrichtung 80 zur Lagerung und Bereitstellung von Hängeprodukten P im Betrieb. Zudem ist in Fig. 1a ein erster Ausgabearm 90 sowie ein zweiter relativ zum ersten Ausgabearm 90 beweglicher Ausgabearm 91 ersichtlich. Anhand eines fest mit der Vorrichtung 80 und dem ersten Ausgabearm 90 verbundenen ersten Steckverbinders 92 und einem fest mit dem zweiten Ausgabearm 91 verbundenen zweiten Steckverbinders 93 sind die beiden Ausgabearme lösbar miteinander verbunden. Dabei ist erkennbar, dass am zweiten beweglichen Ausgabearm 91 eine Umlaufkette 50 angeordnet ist. Die Umlaufkette 50 umfasst eine Vielzahl von Kettengliedern 1. Im Weiteren umfasst jedes Kettenglied 1 einen Haken 15 zum Aufhängen eines Hängeprodukts P. Wie in Fig. 1a ersichtlich, sind die Haken 15 in die einer Umlaufrichtung U der Umlaufkette 50 entgegengesetzte Richtung ausgerichtet. Im Weiteren weist die Umlaufkette 50 eine Ausgabeposition A auf, an welcher die Freigabe eines Hängeprodukts P erfolgt. An der Ausgabeposition A wird die Umlaufkette 50 derart umgelenkt, dass ein freies Ende des Hakens 15 zum Aufhängen eines Hängeprodukts P nach unten ausgerichtet ist und das Hängeprodukt P vom Haken 15 freigegeben wird. An der Ausgabeposition A wechseln die Kettenglieder 1 der Umlaufkette 50 von einer Betriebsausrichtung y, in welcher die Kettenglieder 1 in einer Linie angeordnet sind, in eine Umlenkausrichtung z, in welcher die Kettenglieder 1 angewinkelt zueinander positioniert sind. Im Weiteren ist in Fig. 1a bei der Ausgabeposition A ein Abstreifer 85 ersichtlich, welcher die Freigabe des Hängeprodukts P unterstützt. An der Ausgabeposition A der Vorrichtung 80 eine Frontrolle 81 angeordnet, welche als Zahnrad ausgestaltet ist. Im Weiteren ist in Fig. 1a eine Gleitfläche 86 ersichtlich, derart angeordnet und ausgestaltet, um ein ausgeworfenes Produkt von einem allfällig darüber liegenden Ausgabearm (nicht ersichtlich in Fig. 1a) in einen Ausgabebereich der Vorrichtung (nicht ersichtlich in Fig. 1a).

Optional umfasst die Vorrichtung 80 einen Detektor zur Feststellung der Anwesenheit eines Hängeprodukts P an einem Kettenglied 1 an der Ausgabeposition A der Umlaufkette 50.

Von hier an und im Folgenden bezeichnen gleiche Referenzzeichen gleiche Komponenten in den Figuren.

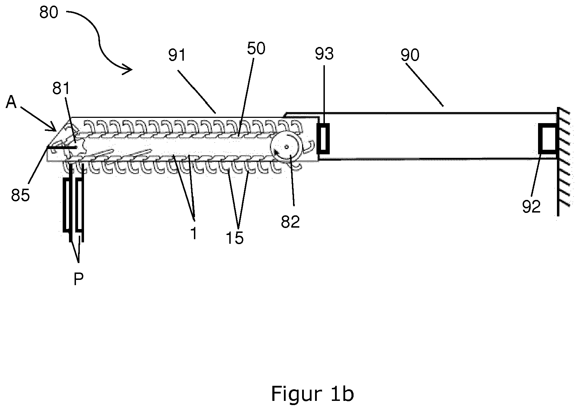

Fig. 1b zeigt eine skizzierte Darstellung einer erfindungsgemässen Vorrichtung 80 mit ausgezogenem zweitem Ausgabearm 91, wobei in diesem Zustand die Befüllung der Vorrichtung mit Hängeprodukten P erleichtert ist. Der erste Ausgabearm 90 ist fest mit der Vorrichtung verbunden. Die Verbindung zwischen dem ersten Steckverbinder 92 und dem zweiten Steckverbinder 93 ist gelöst.

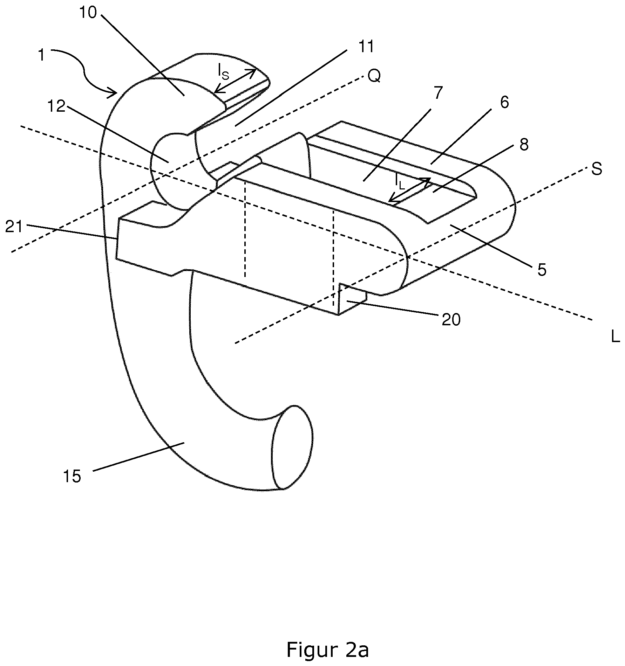

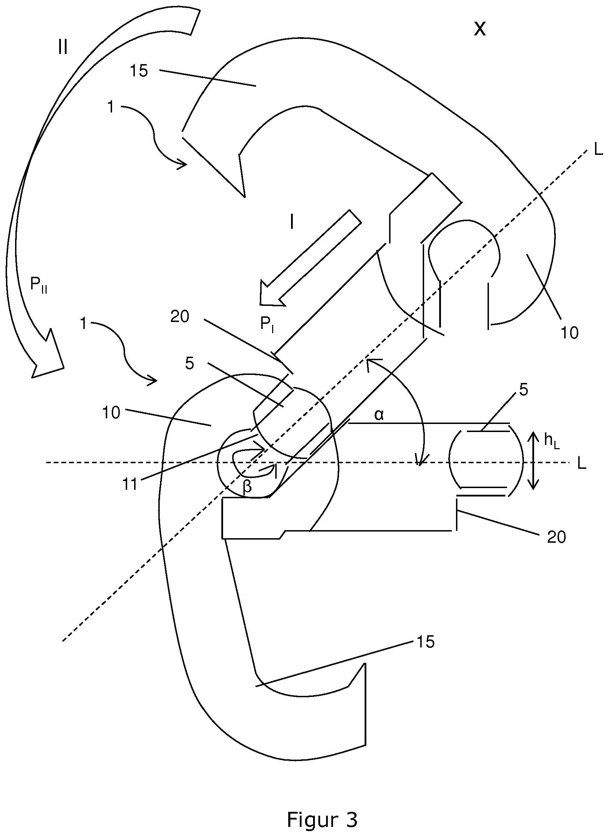

In Fig. 2a ist eine perspektivische Seitenansicht eines erfindungsgemässen, einstückig ausgebildeten Kettenglieds 1 gezeigt. Wie in Fig. 2a ersichtlich weist das Kettenglied 1 zwei parallel zueinander angeordnete Wangen 6 sowie eine stegförmig ausgebildete Lagerachse 5 auf, wobei die Lagerachse 5 einstückig mit den Wangen 6 an einem Ende verbunden ist. Die Achse S der Lagerachse 5 verläuft parallel zur Querrichtung Q eines Schwenklagerteils 10 und senkrecht zur Längserstreckung L des erfindungsgemässen Kettenglieds 1. Im Weiteren zeigt Fig. 2a, dass am anderen Ende der beiden Wangen 6 ein C-förmiges, als offene Öse ausgestaltetes Schwenklagerteil 10 vorgesehen ist. Das Schwenklagerteil 10 geht einstückig in einen Aufhängehaken 15 über. Zudem ist in Fig. 2a ein zwischen den beiden parallel zueinander stehenden Wangen 6, der Lagerachse 5 und dem Schwenklagerteil 10 ein Hohlraum 7 ersichtlich, welcher senkrecht zu einer von der Längserstreckung L und Querrichtung Q aufgespannten Ebene durchgehend ausgebildet ist. Fig. 2a zeigt zudem in Querrichtung Q senkrecht zur Längserstreckung L der Öse verlaufend eine Aussparung 12. Im Weiteren zeigt Fig. 2a ein Einführungsmaul 11 des Schwenklagerteils 10, wobei das Einführungsmaul 11 in die Aussparung 12 mündet und sich in Querrichtung Q vollständig entlang der Aussparung 12 erstreckt. Im Weiteren ist in Fig. 2a ersichtlich, dass die Lagerachse 5 eine Abflachung 8 aufweist, wobei sich die Abflachung 8 in Richtung der Achse S über eine Länge l_{L} erstreckt. Die Länge l_{L} entspricht der Länge l_{S} des Einführungsmauls 11 in Richtung der Querrichtung Q, wodurch ein Einführen der Lagerachse 5 des einen erfindungsgemässen Kettenglieds 1 in das Einführungsmaul 11 des darauf folgenden Kettenglieds 1 (wie in Fig. 3 gezeigt) in einer geführten Bewegung erfolgt.

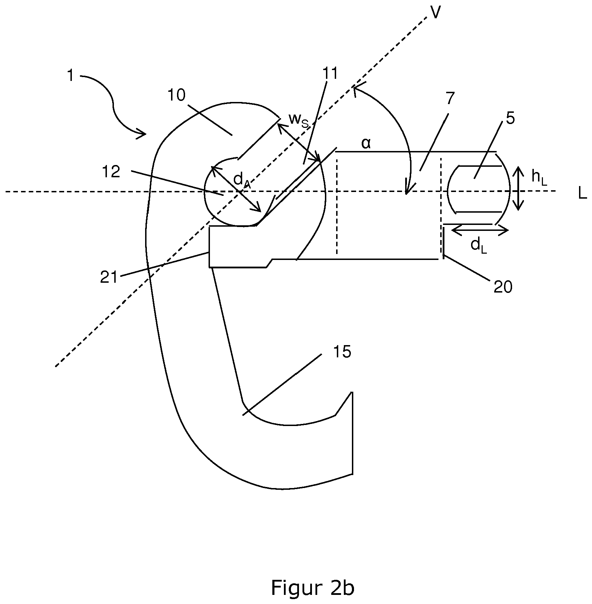

Fig. 2b zeigt einen schematischen Längsschnitt in Richtung der Längserstreckung L eines erfindungsgemässen Kettenglieds 1. In Fig. 2b ist gezeigt, dass zwischen der Verlaufsrichtung V des Einführungsmauls 11 des Schwenklagerteils 10 und der Längserstreckung L des erfindungsgemässen Kettenglieds 1 ein Winkel α von etwa 45° aufgespannt wird. Im Weiteren ist in Fig. 2b angedeutet, dass die Lagerachse 5 zwei gegenüberliegend ausgebildete Abflachungen 8 aufweist. Eine Höhe h_{L} zwischen den beiden Abflachungen 8 ist geringer oder gleich der Öffnungsweite w_{S} des Einführmauls 11 des Schwenklagerteils 10, so dass die Lagerachse 5 durch das Einführungsmaul 11 aufnehmbar ist. In Fig. 2b ist im Weiteren ein Durchmesser d_{L} der Lagerachse 5 gezeigt, welcher dem Durchmesser d_{A} der Aussparung 12 entspricht. Im Weiteren zeigt Fig. 2b eine vordere Schulter 20 sowie eine gegenüberliegend angeordnete Schulter 21 des erfindungsgemässen Kettenglieds 1.

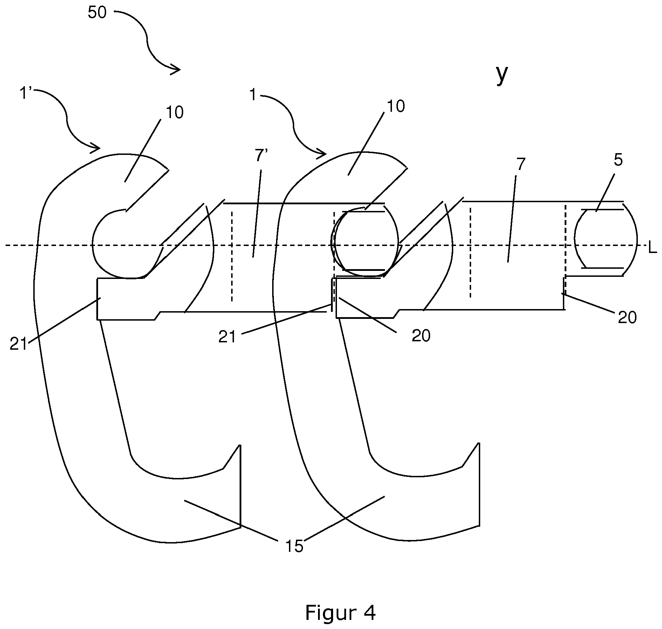

Fig. 3 zeigt eine schematische Seitenansicht zweier benachbarter erfindungsgemässer Kettenglieder 1 in einer Einfahrausrichtung x. In der in Fig. 3 gezeigten Einfahrausrichtung x ist anhand eines Pfeils P_{I} ersichtlich, dass in einem Schritt I die stegförmig ausgebildete Lagerachse 5 des einen erfindungsgemässen Kettenglieds 1 in das Einführungsmaul 11 des darauf folgenden Kettenglieds 1 einführbar ist. Im Weiteren ist in Fig. 3 anhand eines Pfeils P_{II} im Gegenuhrzeigersinn angedeutet, dass nach Einführen der Lagerachse 5 eines Kettenglieds 1 in das Einführungsmaul 11 des Schwenklagerteils 10 des darauf folgenden Kettenglieds 1 durch ein Schwenken in einem Schritt II um einen zwischen den beiden Längsausrichtungen L aufgespannten Winkel β=360°-α=315° aus der in Fig. 3 gezeigten Einfahrausrichtung x in die Betriebsausrichtung y (wie in Fig. 4 gezeigt) überführbar beziehungsweise die beiden Kettenglieder 1 lösbar koppelbar sind.

In Fig. 4 ist eine schematische Seitenansicht zweier benachbarter, erfindungsgemässer Kettenglieder 1 in einer Betriebsausrichtung y gezeigt. Aus Fig. 4 wird ersichtlich, dass in der Betriebsausrichtung y die vordere Schulter 20 eines ersten Kettenglieds 1 und die hintere Schulter 21 eines zweiten Kettenglieds 1' aneinander anliegen. Dadurch liegen in der Betriebsausrichtung y die Längserstreckungen der erfindungsgemässen Kettenglieder 1 der Umlaufkette 50 im Wesentlichen in einer Linie zueinander, wie in Fig. 4 ersichtlich ist. Zudem zeigt Fig. 4, dass in der Betriebsausrichtung y das Schwenklagerteil 10 des ersten Kettenglieds 1 im Hohlraum 7' des zweiten Kettenglieds 1' aufgenommen ist.

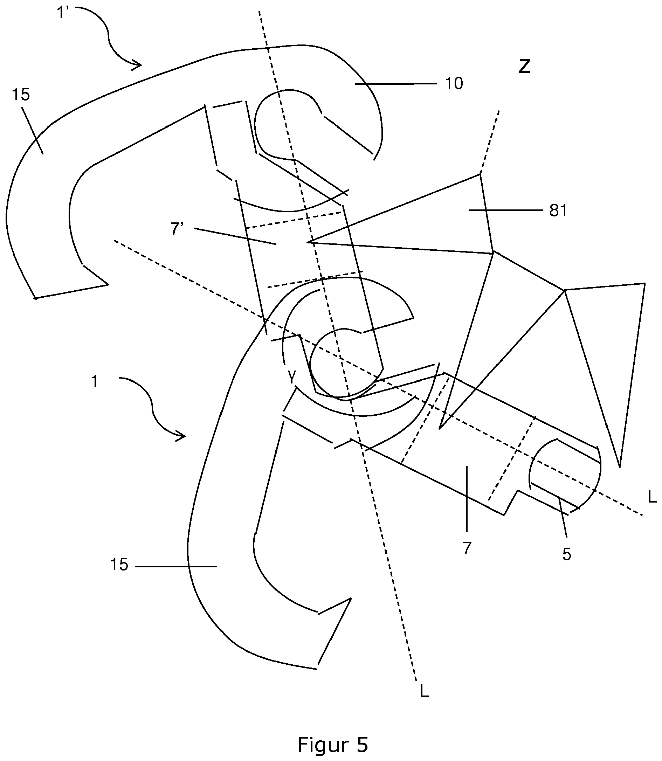

Fig. 5 zeigt eine schematische Seitenansicht zweier benachbarter, erfindungsgemässer Kettenglieder 1 in einer Umlenkausrichtung z bei der Ausgabeposition A zur Ausgabe eines Hängeprodukts P einer Vorrichtung wie in den Fig. 1a und 1b gezeigt. Wie in Fig. 5 gezeigt, werden die Kettenglieder um die als Zahnrad ausgestaltete Frontrolle 81 umgelenkt, wobei die einzelnen Zähne jeweils in den Hohlraum 7 eines erfindungsgemässen Kettenglieds 1 eingreifen. Die als Zahnrad ausgestaltete Frontrolle 81 bewirkt dadurch eine geführte Umlenkung der Kettenglieder 1 im Bereich der Ausgabeposition A der Vorrichtung und wirkt zusätzlich einem Ausklinken beziehungsweise Auskoppeln zweier benachbarter Kettenglieder 1 entgegen. Wie in Fig. 5 ersichtlich wird in der Umlenkausrichtung z zwischen den Längsausrichtungen L zweier benachbarter Kettenglieder 1 ein Winkel γ aufgespannt, wobei der Winkel γ kleiner 315° in allen Positionen in der Umlenkausrichtung z ist, so dass sichergestellt ist, dass zwei benachbarte Kettenglieder 1 in keiner Ausrichtung zueinander während des Betriebs der Umlaufkette 50 automatisch ausklinken können.

### Bezugszeichenliste

- 1: Kettenglied
- 5: Lagerachse
- 6: Wange
- 7: Hohlraum
- 10: Schwenklagerteil
- 11: Einführungsmaul
- 15: Aufhängehaken
- 20: vordere Schulter
- 21: hintere Schulter
- 50: Umlaufkette
- 80: Vorrichtung
- 81: Frontrolle
- 82: Antriebsmotor
- 83: Gehäuse
- 85: Abstreifer
- 86: Gleitfläche
- 90: Erster Tragarm
- 91: Zweiter Tragarm
- 92: Erster Steckverbinder
- 93: Zweiter Steckverbinder

## Patentansprüche

1. Kettenglied (1) zur Ausbildung einer Umlaufkette (50) aus einer Vielzahl von Kettengliedern (1) für eine Vorrichtung (80) zur Lagerung und Bereitstellung mindestens eines Hängeprodukts (P),
das Kettenglied (1) umfassend:
ein Schwenklagerteil (10) mit einer Aussparung (12) und eine in Richtung der Längserstreckung (L) des Kettenglieds (1) beabstandet mittels zwei parallelen Wangen (6) zum Schwenklagerteil (10) angeordneten Lagerachse (5) mit einer Achse (S) senkrecht zur Längserstreckung (L), wobei das Schwenklagerteil (10) C-förmig als offene Öse mit einem Einführungsmaul (11) zur Aufnahme der Lagerachse (5) eines folgenden Kettenglieds (1) ausgebildet ist, und wobei das Einführungsmaul (11) in die Aussparung (12) mündend sich in Querrichtung (Q) vollständig entlang der Aussparung (12) erstreckend ausgebildet ist,
**dadurch gekennzeichnet, dass**
das Kettenglied (1) einen Aufhängehaken (15) zum Aufhängen eines Hängeprodukts (P) umfasst, dass das Kettenglied (1) einstückig ausgestaltet ist und dass das Schwenklagerteil (10) einstückig in den Aufhängehaken (15) übergeht.

2. Kettenglied (1) nach Anspruch 1,
**dadurch gekennzeichnet, dass**
die Lagerachse (5) derart ausgestaltet ist, dass die Lagerachse (5) quer zur Achse (S) der Lagerachse (5) durch das Einführungsmaul (11) bis in die Aussparung (12) des als offene Öse ausgestalteten C-förmigen Schwenklagerteils (10) mündend aufnehmbar ist.

3. Kettenglied (1) nach Anspruch 1 oder 2,
**dadurch gekennzeichnet, dass**
zwischen der Verlaufsrichtung des Einführungsmauls (11) des Schwenklagerteils (10) und der Längserstreckung (L) ein Winkel α aufgespannt wird zwischen 5 ° bis 90°, bevorzugt 30° bis 60°, am meisten bevorzugt 40° bis 50°.

4. Kettenglied (1) nach Anspruch 3,
**dadurch gekennzeichnet, dass**
das Kettenglied (1) zur Ausbildung einer Umlaufkette (50) aus einer Vielzahl von Kettengliedern (1) derart ausgestaltet ist, dass mittels Einführen der Lagerachse (5) eines Kettenglieds (1) in das Einführungsmaul (11) bis in die Aussparung (12) des Schwenklagerteils (10) eines benachbarten Kettenglieds (1) bei einer Einfahrausrichtung (x) und Schwenken von der Einfahrausrichtung (x) in eine Betriebsausrichtung (y) um einen Winkel β=360°-α das eine Kettenglied (1) mit dem benachbarten Kettenglied (1) lösbar koppelbar ist.

5. Kettenglied (1) nach Anspruch 4,
**dadurch gekennzeichnet, dass**
das Kettenglied (1) eine vordere Schulter (20) und eine gegenüberliegend angeordneten hintere Schulter (21) umfasst, die derart angeordnet und ausgestaltet sind, zwei benachbarte Kettenglieder (1) in der Betriebsausrichtung (y) in Richtung deren Längserstreckungen L zueinander auszurichten.

6. Kettenglied (1) nach Anspruch 4 oder 5,
**dadurch gekennzeichnet, dass**
das Kettenglied (1) derart ausgestaltet ist, dass der Winkel β zweier benachbarter Kettenglieder (1) der Umlaufkette (50) in der Einfahrausrichtung (x) grösser ist als ein Winkel γ zweier benachbarter Kettenglieder (1) der Umlaufkette (50) in einer Umlenkausrichtung (z), insbesondere bei einer Ausgabeposition der Vorrichtung (80) zur Ausgabe eines Hängeprodukts (P), so dass sichergestellt ist, dass zwei benachbarte Kettenglieder (1) in keiner Ausrichtung zueinander während des Betriebs der Vorrichtung (80) automatisch ausklinken können.

7. Kettenglied (1) nach einem der vorherigen Ansprüche,
**dadurch gekennzeichnet, dass**
das Kettenglied (1) als Kunststoff-Spritzgussteil ausgebildet ist.

8. Umlaufkette (50) für eine Vorrichtung (80) zur Lagerung und Bereitstellung eines Hängeprodukts (P) umfassend eine Vielzahl von Kettengliedern (1) nach einem der vorherigen Ansprüche.

9. Verfahren zur Ausbildung einer Umlaufkette (50) für eine Vorrichtung (80) zur Lagerung und Bereitstellung eines Hängeprodukts (P)
umfassend die Schritte:
(i) Bereitstellung von n Kettengliedern (1) nach einem der vorherigen Ansprüche 1 bis 7
(ii) Lösbares Koppeln jeweils eines ersten mit dem zweiten Kettenglied (1) und Wiederholung dieser Kopplung bis zum (n-1)-ten mit dem n-ten Kettenglied (1) sowie des ersten mit dem n-ten Kettenglieds (1) zur Ausbildung einer geschlossenen Umlaufkette (50), mittels Einführen der Lagerachse (5) eines Kettenglieds (1) in das Einführungsmaul (11) des Schwenklagerteils (10) eines benachbarten Kettenglieds (1).

10. Verfahren zur Ausbildung einer Umlaufkette (50) für eine Vorrichtung (80) zur Lagerung und Bereitstellung eines Hängeprodukts (P) nach Anspruch 9,
wobei in Schritt (ii):
das lösbare Koppeln der n Kettenglieder (1) mittels Einführen der Lagerachse (5) eines Kettenglieds (1) in das Einführungsmaul (11) des Schwenklagerteils (10) eines benachbarten Kettenglieds (1) bei einer Einfahrausrichtung (x) und Schwenken von der Einfahrausrichtung (x) in eine Betriebsausrichtung (y) um einen Winkel β=360°-α erfolgt.

11. Vorrichtung (80) zur Lagerung und Bereitstellung eines Hängeprodukts (P) mit einer Umlaufkette (50) nach Anspruch 8.

12. Vorrichtung (80) zur Lagerung und Bereitstellung eines Hängeprodukts (P) nach Anspruch 11,
**dadurch gekennzeichnet, dass**
die Vorrichtung (80) einen Abstreifer (85) zum Abstreifen des Hängeprodukts (P) umfasst.

13. Vorrichtung (80) zur Lagerung und Bereitstellung eines Hängeprodukts (P) nach Anspruch 11 oder 12,
**dadurch gekennzeichnet, dass**
die Vorrichtung (80) einen ersten Ausgabearm (90) und einen zweiten Ausgabearm (91) umfasst, wobei der erste Ausgabearm (90) fest mit der Vorrichtung (80) verbindbar ist und wobei der zweite Ausgabearm (91) relativ zum ersten Ausgabearm (90) beweglich ist.

14. Vorrichtung (80) zur Lagerung und Bereitstellung eines Hängeprodukts (P) nach einem der Ansprüche 11 bis 13,
**dadurch gekennzeichnet, dass**
die Vorrichtung (80) einen Detektor (94) umfasst zur Feststellung der Anwesenheit eines Hängeprodukts (P) an einem Kettenglied (1), insbesondere an der Ausgabeposition.

## Claims

1. Chain link (1) for forming a circular chain (50) made up of a plurality of chain links (1) for an apparatus (80) for storing and providing at least one suspension product (P), the chain link (1) thereby comprising:
a swivelling bearing part (10) with a recess (12) and
a bearing axis (5) arranged spaced away from the swivelling bearing part (10) in the direction of the longitudinal extension (L) of the chain link (1) by means of two parallel flange pieces (6) with an axis (S) perpendicular to the longitudinal extension (L), wherein the swivelling bearing part (10) is C-shaped and designed as an open eyelet with an insertion mouth (11) to hold the bearing axis (5) of a successive chain link (1) and wherein the insertion mouth (11) is designed to lead into the recess (12), thereby completely extending along the recess (12) in the transverse direction (Q), **characterized in that** the chain link (1) comprises a suspension hook (15) to suspend a suspension product (P), that the chain link (1) is designed as a single piece, and that the swivelling bearing piece (10) passes into the suspension hook (15) as a single piece.

2. Chain link (1) according to Claim 1, **characterized in that** the bearing axis (5) is designed in such a way that the bearing axis (5) can be held perpendicular to the axis (S) of the bearing axis (5) flowing into the insertion mouth (11) up until it leads into the recess (12) of the C-shaped swivelling bearing part (10) designed as an open eyelet.

3. Chain link (1) according to Claim 1 or 2, **characterized in that** an angle α between 5° to 90°, preferably between 30° to 60°, particularly preferred between 40° and 50°, is spanned between the running direction of the insertion mouth (11) of the swivelling bearing part (10) and the longitudinal extension (L).

4. Chain link (1) according to Claim 3, **characterized in that** the chain link (1) is designed to form a circular chain (50) made up of a plurality of chain links (1) in such a way that the one chain link (1) can be coupled with the adjacent chain link (1) in a detachable manner by inserting the longitudinal axis (5) of a chain link (1) into the insertion mouth (11) until it passes into the recess (12) of the swivelling bearing part (10) of an adjacent chain link (1) in the case of an insertion alignment (x) and swivelling the insertion alignment (x) into an operating alignment (y) at an angle β=360°-α.

5. Chain link (1) according to Claim 4, **characterized in that** the chain link (1) comprises a front shoulder (20) and a back shoulder (21) lying opposite, which are arranged and designed in such a way as to align two adjacent chain links (1) towards each other in the direction of their longitudinal extensions L in the operating alignment (y).

6. Chain link (1) according to Claim 4 or 5, **characterized in that** the chain link (1) is designed in such a way that the angle β of two adjacent chain links (1) of the circular chain (50) in the insertion alignment (x) is larger than an angle γ of two adjacent chain links (1) of the circular chain (50) in a deflection alignment (z), in particular, in the case of an output position of the apparatus (80) to output a suspension product (P) so that it is ensured that two adjacent chain links (1) cannot automatically disengage in any alignment towards each other during operation of the apparatus (80).

7. Chain link (1) according to any one of the preceding claims, **characterized in that** the chain link (1) is designed as a plastic injection-moulded part.

8. Circular chain (50) for an apparatus (80) for storing and providing a suspension product (P) comprising a plurality of chain links (1) according to one of the preceding claims.

9. Method to form a circular chain (50) for an apparatus (80) for storing and providing a suspension product (P) comprising the steps:
(i) provision of n chain links (1) according to one of the preceding claims 1 to 7
(ii) detachable coupling of a first chain link (1) to a second chain link (1) and iteration of this coupling until the (n-1)-th to the n-th chain link(1) as well as the first one to the n-th chain link (1) to form a closed circular chain (50) by means of inserting the bearing axis (5) of a chain link (1) into the insertion mouth (11) of the swivelling bearing part (10) of an adjacent chain link (1).

10. Method to design a circular chain (50) for an apparatus (80) for storing and providing a suspension product (P) according to Claim 9, wherein at step (ii):
the detachable coupling of n chain links (1) takes place by means of inserting the bearing axis (5) of a chain link (1) into the insertion mouth (11) of the swivelling bearing part (10) of an adjacent chain link (1) in the case of an insertion alignment (x) and swivelling of the insertion alignment (x) into an operating alignment (y) at an angle β=360°-α.

11. Apparatus (80) for storing and providing a suspension product (P) with a circular chain (50) according to Claim 8.

12. Apparatus (80) for storing and providing a suspension product (P) according to Claim 11, **characterized in that** the apparatus (80) comprises a scraper bar (85) to scrape the suspension product (P).

13. Apparatus (80) for storing and providing a suspension product (P) according to Claim 11 or 12, **characterized in that** the apparatus (80) comprises a first output arm (90) and a second output arm (91), wherein the first output arm (90) can be firmly connected to the apparatus (80) and wherein the second output arm (91) can be moved relative to the first output arm (90).

14. Apparatus (80) for storing and providing a suspension product (P) according to one of the claims 11 to 13, **characterized in that** the apparatus (80) comprises a detector (94) to determine the presence of a suspension product (P) at a chain link (1), in particular at the output position.

## Revendications

1. Maillon de chaine (1) pour réaliser une chaine rotative (50) composée d'une pluralité de maillons de chaine (1) pour un dispositif (80) de positionnement et fourniture d'au moins un produit suspendu (P), le maillon de chaine (1) comprenant :
une partie de palier de pivotement (10)comportant une cavité (12) et un axe de palier (5) disposé en espacement dans la direction de l'extension longitudinale (L) du maillon de chaine (1) au moyen de deux joues parallèles (6) par rapport à la partie de palier de pivotement (10) comportant un axe (S) perpendiculaire à l'extension longitudinale (L), dans lequel la partie de palier de pivotement (10) est configurée en forme de C comme un oeillet ouvert avec une bouche d'insertion (11) pour recevoir l'axe de palier (5) d'un maillon de chaine suivant (1), et dans lequel la bouche d'insertion (11) est configurée de manière à déboucher dans la cavité (12) en s'étendant sur la totalité de la longueur de la cavité (12) dans la direction transversale (Q), **caractérisé en ce que** le maillon de chaine (1) comprend un crochet de suspension (15) pour suspendre un produit suspendu (P), **en ce que** le maillon de chaine (1) est configuré en un seul tenant et **en ce que** la partie de palier de pivotement (10) aboutit en un seul tenant dans la crochet de suspension (15) .

2. Maillon de chaine (1) selon la revendication 1, **caractérisé en ce que** l'axe de palier (5) est configuré de telle sorte que l'axe de palier (5) puisse être reçu transversalement à l'axe (S) de l'axe de palier (5) à travers la bouche d'insertion (11) en débouchant jusque dans la cavité (12) de la partie de palier de pivotement (10) en forme de C configurée comme un oeillet ouvert.

3. Maillon de chaine (1) selon la revendication 1 ou 2, **caractérisé en ce que** entre la direction d'extension de la bouche d'insertion (11) de la partie de palier de pivotement (10) et l'extension longitudinale (L) un angle α est défini, compris entre 5° et 90°, de préférence entre 30° et 60°, de manière la plus préférée entre 40° et 50°.

4. Maillon de chaine (1) selon la revendication 3, **caractérisé en ce que** le maillon de chaine (1) pour réaliser une chaine rotative (50) est composé d'une pluralité de maillons de chaine (1) de telle sorte que au moyen de l'insertion de l'axe de palier (5) d'un maillon de chaine (1) dans la bouche d'insertion (11) jusque dans la cavité (12) de la partie de palier de pivotement (10) d'un maillon de chaine voisin (1), en présence d'une orientation de rétraction (x) et d'un pivotement de l'orientation de rétraction (x) à une orientation d'exploitation (y) à un angle β=360°-α , le maillon de chaine (1) puisse être couplé de manière amovible avec la maillon de chaine voisin (1).

5. Maillon de chaine (1) selon la revendication 4, **caractérisé en ce que** le maillon de chaine (1) comprend un épaulement avant (20) et un épaulement arrière (21) disposée en vis-à-vis, qui est disposé et configuré de manière à orienter deux maillons de chaine voisins (1) l'un par rapport à l'autre dans l'orientation d'exploitation (y) dans la direction de leurs extensions longitudinales L.

6. Maillon de chaine (1) selon la revendication 4 ou 5, **caractérisé en ce que** le maillon de chaine (1) est configuré de telle sorte que l'angle β de deux maillons de chaine voisins (1) de la chaine rotative (50) dans l'orientation de rétraction (x) est plus grand qu'un angle Y de deux maillons de chaine voisins (1) de la chaine rotative (50) dans une orientation de renvoi (z), notamment dans une position de remise du dispositif (80) pour la remise d'un produit suspendu (P), de sorte qu'il soit garanti que deux mailons de chaine voisins (1) ne puissent se décrocher automatiquement dans aucune orientation l'un par rapport à l'autre pendant le fonctionnement du dispositif (80).

7. Maillon de chaine (1) selon une des revendications précédentes, **caractérisé en ce que** le maillon de chaine (1) est réalisé comme une pièce moulée par injection en plastique.

8. Chaine rotative (50) pour un dispositif (80) de positionnement et fourniture d'un produit suspendu (P) comprenant une pluralité de maillons de chaine (1) selon une des revendications précédentes.

9. Procédé de configuration d'une chaine rotative (50) pour un dispositif (80) de positionnement et fourniture d'un produit suspendu (P) comprenant les étapes de :
(i) fourniture de n maillons de chaine (1) selon une des revendications précédentes 1 à 7,
(ii) couplage amovible respectivement d'un premier maillon avec le deuxième maillon de chaine (1) et répétition de cet accouplement jusqu'au (n-1) ème avec le n-ème maillon de chaine (1) ainsi que le premier avec le n-ème maillon de chaine (1) pour réaliser une chaine rotative fermée (50), au moyen de l'insertion de l'axe de palier(5) d'un maillon de chaine (1) dans la bouche d'insertion (11) de la partie de palier de pivotement (10) d'un maillon de chaine voisin (1).

10. Procédé de configuration d'une chaine rotative (50) pour un dispositif (80) de positionnement et fourniture d'un produit suspendu (P) selon la revendication 9, dans lequel à l'étape (ii) :
le couplage amovible des n maillons de chaine (1) au moyen de l'insertion de l'axe de palier (5) d'un maillon de chine (1) dans la bouche d'insertion (11) de la partie de palier de pivotement (10) d'un maillon de chaine voisin (1) en présence d'une orientation de rétraction (x) et d'un pivotement de l'orientation de rétraction (x) à une orientation d'exploitation (y) a lieu à un angle β=360°-α.

11. Dispositif (80) de positionnement et fourniture d'un produit suspendu (P) comportant une chaine rotative (50) selon la revendication 8.

12. Dispositif (80) de positionnement et fourniture d'un produit suspendu (P) selon la revendication 11, **caractérisé en ce que** le dispositif (80) comprend un racloir (85) pour racler le produit suspendu (P).

13. Dispositif (80) de positionnement et fourniture d'un produit suspendu (P) selon la revendication 11 ou 12, **caractérisé en ce que** le dispositif (80) comprend un premier bras de remise (90) et un deuxième bras de remise (91), dans lequel le premier bras de remise (90) peut être relié solidement avec le dispositif (80) et dans lequel le deuxième bras de remise (91) est mobile par rapport au premier bras de remise (90).

14. Dispositif (80) de positionnement et fourniture d'un produit suspendu (P) selon une des revendication 11 à 13, **caractérisé en ce que** le dispositif (80) comprend un détecteur (94) afin de déterminer la présence d'un produit suspendu (P) sur un maillon de chaine (1), notamment à la position de remise.
